(19) Europäisches Patentamt

European Patent Office

Office européen des brevets

(11) **EP 2 173 777 B1**

(12) **EUROPEAN PATENT SPECIFICATION**

(45) Date of publication and mention
of the grant of the patent:
**18.05.2011 Bulletin 2011/20**

(21) Application number: **08786705.7**

(22) Date of filing: **31.07.2008**

(51) Int Cl.:
***C08F 2/18*** *(2006.01)*          ***C08F 2/38*** *(2006.01)*

(86) International application number:
**PCT/EP2008/060083**

(87) International publication number:
**WO 2009/016239 (05.02.2009 Gazette 2009/06)**

(54) **AQUEOUS DISPERSIONS CONTAINING CRYSTALLISABLE BLOCK COPOLYMERS**

WÄSSRIGE DISPERSIONEN MIT KRISTALLISIERBAREN BLOCKCOPOLYMEREN

DISPERSIONS AQUEUSES CONTENANT DES COPOLYMÈRES À BLOCS CRISTALLISABLES

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **02.08.2007 EP 07015179**

(43) Date of publication of application:
**14.04.2010 Bulletin 2010/15**

(73) Proprietor: **DSM IP Assets B.V.
6411 TE Heerlen (NL)**

(72) Inventors:
• **GEURTS, John
NL-5145 PE Waalwijk (NL)**
• **SCHELLEKENS, Michael Arnoldus Jacobus
NL-5145PE Waalwijk (NL)**

• **NABUURS, Tijs
NL-5145 PE Waalwijk (NL)**
• **OVERBEEK, Gerardus Cornelis
Waalwijk
5145 PE (NL)**

(74) Representative: **Schmitt, Maja
DSM Intellectual Property
P.O. Box 4
6100 AA Echt (NL)**

(56) References cited:
**EP-A- 0 947 527         EP-A- 1 693 392
WO-A-98/25710          WO-A-03/040192
WO-A-03/055919        WO-A-2005/097854
US-A1- 2004 054 108   US-B1- 7 064 151**

**Description**

The present invention relates to an aqueous dispersion comprising a crystallisable vinyl block copolymer and a vinyl polymer, processes for the preparation of such dispersions and their use as coatings.

It is well known that the physical properties of coating films are controlled by a careful design of the components reacted together and by the specific processes used for preparing the coating compositions. For example in order to prepare a heat sealable coating composition for substrates like polyester, OPP (oriented polypropylene) and even polylactic acid films there is a difficulty in obtaining the required physical characteristics, i.e. the film should be formed at room temperature, should be sealable at temperatures between 80 to 120°C and should be non-blocking at around 60°C. A special problem occurs with films of materials that can not handle high temperatures. For instance films prepared from polylactic acid, start to give wrinkling problems when heated above 80°C. Furthermore, for practical reasons the film should be flexible but not tacky since it should be possible to roll up and unroll the film without destroying the quality of the film. All these characteristics put a high demand on the design of the polymer dispersion that should fulfill all these requirements.

One class of polymers which could be used for these applications are coatings comprising side chain crystalline (SCC) polymers. However, almost all known coating compositions containing SCC polymers have the disadvantage that the polymer is dissolved in an organic solvent. Organic solvents are environmentally not desirable and require specific controlling measures.

Attempts have been made to prepare aqueous dispersions of SCC polymers that are useful for coating fibrous materials such as hair and fabrics, in cosmetic compositions or for coating organisms such as seeds.

In all cases the coating consists mainly of crystalline polymer since other components in the polymer chain disrupt the crystallinity. These high quantities are not always desired since coating coherency may be seriously compromised when the film comprising the crystalline polymer is heated above the melting temperature of the polymer.

For example, EP 0949975 describes aqueous dispersions of crystalline polymers and the methods for making them. To control the coherency of a film obtained from such dispersions when heated above the melting temperature (Tm) of the crystalline polymer, the polymer had to be at least partly crosslinked. However, such a composition is not suitable for obtaining a coherent film with heat seal properties since the crosslinked polymer hinders polymer diffusion. A two-stage polymerisation process resulted in a core-shell morphology and therefore high amounts (at least 50 wt% in the total polymer content) of crystalline polymer were needed, since low amounts of crystalline polymer would only have a minor effect on the overall mechanical performance of the film due to the film morphology.

EP0989143 describes polymers comprising a synthetic wax monomer (crystallisable (meth)acrylate monomers) and a second monomer that are prepared using dispersion polymerisation techniques. EP0989143 does not disclose crystallisable block copolymers

US2004/0054108 discloses a method for making a block or gradient (co-)polymer by radically polymerising unsaturated monomers to an intermediate polymer in the presence of iodine or iodine containing chain transfer agent followed by radically polymerizing monomers in the presence of the intermediate polymer of the first step. However, iodine has, besides the strong yellowing property and the general toxicity of a halide, the drawback of having strong site reactions in aqueous environment (see for example Lacroix-Desmazes et al, "Reverse Iodine Transfer Polymerisation (RITP) in emulsion", Macromol. Symp. 2007, 248, 150-157) and a long reaction time and therefore its use may be undesirable for specific applications.

WO2005/097854 discloses an aqueous composition comprising a crosslinkable vinyl oligomer and a vinyl polymer made in the presence of the vinyl oligomer, where the polymer is more hydrophobic than the vinyl oligomer. However, the oligomer is not a crystallisable block copolymer.

EP0947527 discloses a controlled free-radical polymerisation process for forming waterborne block copolymers by degenerative iodine transfer or atom transfer radical polymerisation processes. The synthesis of the block copolymer takes place in water, which is unsuitable for making crystallisable vinyl block copolymers since the crystallisable vinyl monomers are very hydrophobic and do not mix with water. Even the addition of surfactant to such system would generally lead to an unstable emulsion. As for US2004/0054108, the drawbacks regarding the use of iodine in the polymerisation are here also valid.

WO03/040192 discloses a polymerisation process from the steps of first polymerising a mixture substantially free of organic solvents of unsaturated monomers comprising at least 70 wt% methacrylates in the presence of a chain transfer agent to form a first polymer and aqueous emulsion polymerizing unsaturated monomers in the presence of the first polymer to form a dispersion of a water-insoluble second polymer. This polymerisation process is not a controlled radical process (since a chain transfer agent is not a control agent); the polymer resulting from such a polymerisation is not a block copolymer. Moreover, the polymer is not made crystallisable.

EP1693392 discloses a process for forming an aqueous dispersion having at least two polymeric components, one of high molecular weight and another of low molecular weight. This polymerisation process is not a controlled radical process, therefore it does not yield a crystallisable block copolymer.

The article "Synthesis of Block, Statistical, and Gradient Copolymers from Octadecyl (Meth)acrylates Using Atom Transfer Polymerisation" from Qin, S. et al, Macromolecules; 36:8969-8977 (2003) describes the preparation of random, block and gradient copolymers from t-butyl (meth)acrylate and octadecyl (meth)acrylate using atom transfer radical polymerisation (ATRP). However, ATRP has the disadvantage of using heavy metals, not being able to polymerise acid-functional monomers and it is difficult to use in emulsion polymerisations.

Direct emulsion polymerisation of hydrophobic monomers to obtain crystallinity is considered difficult. The main problem generally is the incapability of the extremely hydrophobic monomers to pass through the aqueous phase to reach the locus of polymerisation. Therefore there was a need for new ways to prepare aqueous dispersions that provide films comprising crystallisable polymers suitable for coatings or packaging.

There is an increased range of polymerisation methods available for adaptation to polymerisations to make waterborne polymers for various applications. A problem often encountered in the preparation of conventional waterborne copolymers is that the level of control over the polymer chain architecture and chain composition is often insufficient to attain the desired final application properties.

In particular controlled radical polymerisation techniques such as nitroxide mediated polymerisation (NMP), atom transfer radical polymerisation (ATRP), and degenerative transfer techniques such as reversible addition-fragmentation chain transfer (RAFT) polymerisation have been investigated as a means to control polymer chain composition and architecture.

We have surprisingly found that according to the present invention the reversible addition-fragmentation chain transfer (RAFT) polymerisation process may be used to synthesise vinyl block copolymers that contain a crystallisable block next to at least a second, different, block; which polymerisation process provides a useful route for making aqueous dispersions whereby preferably the vinyl block copolymer is completely or partly bound to a vinyl polymer. Such vinyl block copolymer- polymers and compositions comprising them can be used to provide polymeric binders that enable crystal domain formation inside a polymeric film even at low amounts of crystallisable monomers. That crystallisation does still occur even when low amounts of crystallisable monomers are incorporated is due to the controlled way the block copolymers are being prepared; therefore such a polymeric binder can be used to provide film properties such as if it would contain higher amounts of crystallisable monomers and can be useful for instance for polymeric film coatings with heat sealability properties.

According to the invention there is provided an aqueous dispersion comprising a crystallisable vinyl block copolymer - polymer which comprises:

i) a vinyl block copolymer comprising at least blocks $[A]_x[B]_y$, wherein at least a crystallisable block [A] is obtained by a controlled radical polymerisation of at least one vinyl monomer via a reversible addition-fragmentation chain transfer (RAFT) mechanism in solution, in the presence of a control agent and a source of free radicals; and wherein the vinyl block copolymer comprises 2 to 45 wt % of vinyl monomers bearing at least a crystallisable side chain by weight of the vinyl block copolymer - polymer;
wherein vinyl monomers bearing crystallizable side chains are monomers with side chains containing in total at least 5 times as many carbon atoms as the backbone of the monomer;
wherein crystallisable block [A] has an average degree of polymerisation x, wherein x is an integer in the range of from 3 to 80;
wherein block [B] has an average degree of polymerisation y, wherein y is an integer $\geq 3$; and
ii) a vinyl polymer [P] obtained by the free radical emulsion polymerisation of one or more vinyl monomers in the presence of the vinyl block copolymer; and wherein the block copolymer : polymer weight ratio is in the range of from 10:90 to 70:30.

For the purpose of the invention, the term "crystallisable" means here the potential of a material to crystallise, i.e. to change from an amorphous state to a crystalline state. However, although the material can crystallise, it does not necessarily have to be crystalline. In some cases crystallisation may occur at lower temperatures, even below 0 °C, implying that in applications at room temperature the material will not crystallise or be crystalline.

For the purpose of the invention, the expression "chain" is defined as a linear chain containing at least 10 carbon atoms ($C_{10}$).

For the purpose of the invention, the expression "crystallisable chain" means group of atoms or units which, if on their own, it would change from the amorphous state to the crystalline state reversibly, depending on whether the chain was above or below the melting temperature.

For the purpose of the invention, a "side chain" is a group of atoms or units which are pendant or lateral relative to a block copolymer or polymer.

The terms: monomer, block copolymer, polymer, control agent, initiator, chain transfer agent are intended to cover the singular as well as the plural.

The block copolymer and polymer [P] are both obtained from ethylenically unsaturated monomers (vinyl monomers) and may therefore also be called a vinyl block copolymer and a vinyl polymer. The term: "vinyl monomer bearing crystallisable side chains" is equivalent to "crystallisable vinyl monomer".

A parameter that describes the crystallinity is the melting temperature (Tm). Crystalline melting temperatures given herein are the top of the peak of the first derivative of the dH/dT curve produced using a differential scanning calorimeter (DSC).

The crystallisable block [A] of the vinyl block copolymer preferably has a melting temperature Tm ≤ 110 °C, more preferably in the range of from - 40 to 100°C and most preferably in the range of from 35 to 70 °C. The ranges disclosed above for the Tm of the crystallisable block [A] were found to be most advantageous in optimising the heat-sealing properties of the coatings obtained according to the invention.

The Tg of the vinyl polymer herein stands for the glass transition temperature and is well known to be the temperature at which a polymer changes from a glassy, brittle state to a rubbery state. Tg values of polymers may be calculated using the well-known Fox equation. Thus the Tg, in degrees Kelvin, of a copolymer having "n" copolymerised comonomers is given by the weight fractions W of each comonomer type and the Tg's of the homopolymers (in degrees Kelvin) derived from each comonomer according to the equation:

$$1/Tg = W_1 / Tg_1 + W_2 / Tg_2 + \ldots + W_n / Tg_n.$$

The calculated Tg in degrees Kelvin may be readily converted to °C.

Preferably the Tg of the vinyl polymer is ≥ 0 °C. Preferably the Tg of the vinyl polymer is ≤ 100 °C and more preferably ≤ 80 °C.

The ranges disclosed above for the Tg of the vinyl polymer were found to be most advantageous in optimising the heat-sealing properties of the coatings obtained according to the invention.

Weight average molecular weights (Mw) or number average molecular weights (Mn) of the vinyl block copolymer and polymer may be determined by using gel permeation chromatography (GPC) as described below.

For the purpose of the invention, the number average molecular weight Mn of the vinyl block copolymer is preferably in the range of from 1,000 to 50,000 g/mol, more preferably 1,000 to 35,000 g/mol and most preferably 3,000 to 25,000 g/mol. The polydispersity index (PDI) is defined as PDI = Mw/Mn. The PDI is preferably in the range of from 1.1 to 3 and more preferably in the range of from 1.1 to 2.5.

Preferably polymer [P] has a weight average molecular weight ≤ 1,000,000 g/mol, more preferably ≤ 750,000 g/mol and especially ≤ 500,000 g/mol. Preferably polymer [P] has a weight average molecular weight ≥ 20,000 g/mol and more preferably ≥ 50,000 g/mol.

Preferably the total polymer composition (the block copolymer and polymer [P], when covalently bound together) has a weight average molecular weight in the range of from 21,000 to 750,000 g/mol, more preferably 25,000 to 500,000 and especially 30,000 to 400,000 g/mol.

Preferably the weight average molecular weight of polymer [P] is higher than the weight average molecular weight of the block copolymer. Preferably the difference between the Mw of the vinyl polymer and the vinyl block copolymer is Mw (P) - Mw ([A]$_x$[B]$_y$) ≥ 5,000 g/mol, more preferably ≥ 10,000 g/mol.

A block copolymer is understood to be a copolymer comprising at least two successive sections of blocks of monomer units of different chemical constitutions. The block copolymers of the invention can therefore be diblock, triblock or multiblock copolymers. Block copolymers may be linear, branched, star or comb like, and have structures like [A][B], [A][B][A], [A][B][C], [A][B][A][B], [A][B][C][B]. Preferably the block copolymer is a linear diblock copolymer of structure [A][B], or a linear triblock copolymer of structure [A][B][A]. Block copolymers may have multiple blocks [A], [B] and optionally [C] in which case the block copolymer is represented as for example [A]$_x$[B]$_y$ or [A]$_x$[B]$_y$[C]$_z$, where x, y and z are the degrees of polymerisation (DP) of the corresponding blocks [A], [B] or [C].

Furthermore any of the blocks in the block copolymer could be either a homopolymer, meaning only one type of monomer, or a copolymer, meaning more than one type of monomer.

The advantage of preparing an [A][B] type of vinyl block copolymer via the RAFT polymerisation, followed by preparing a polymer [P], is that a controlled morphology is obtained where the crystallisable monomers are grouped together in a block and therefore a lower amount of crystallisable monomers is needed to obtain beneficial properties for the film, like elasticity, heat-sealibility below 100°C and a non-tacky film that can be rolled and unrolled easily. Preparing only a vinyl block copolymer which mainly comprises crystallisable vinyl monomers is possible however it would be rather expensive, while using only the polymer [P] to prepare the aqueous dispersion would not ensure structural integrity to the dried coating above the melting temperature.

An advantage of controlled radical polymerisation via RAFT mechanism in for example a solution is that this polymerisation method can fully control the polymer chain composition and the chain architecture of waterborne polymers. By making for example a vinyl block copolymer [A][B], followed by preparing a vinyl polymer [P], waterborne binder materials can be obtained for coatings.

The technical benefit of this method is the possibility to incorporate via RAFT very hydrophobic monomers (for example stearyl acrylate) in an aqueous dispersion in a very controlled manner while maintaining properties like crystallinity.

Aqueous dispersions containing hydrophobic monomers to obtain crystallinity can be prepared either by emulsion polymerisation (however it is difficult to incorporate them by this method), mini-emulsion polymerisation (but in general high shear and/or high amount of surfactant is needed) or solution dispersion (which can be surfactant free if the polymer morphology is controlled).

After being prepared using the RAFT polymerisation process, the vinyl block copolymer is dispersed in water and in a separate step a free radical emulsion polymerisation is conducted in the presence of said vinyl block copolymer dispersion to obtain a crystallisable vinyl block copolymer- polymer dispersed in an aqueous phase. The crystallisable vinyl block copolymer-polymer may be considered as a particle and the particle size can be determined by suitable means, for example light scattering.

The vinyl block copolymer- polymer obtained as such can contain low amounts of crystallisable material and yet the physical properties can still be dominated by the crystallisable material (despite being present in low amounts), as the morphology of the vinyl block copolymer- polymer is controlled. For example, when a film obtained from such crystallisable vinyl block copolymer- polymer according to the invention is brought above the melting temperature properties like heat sealability can be achieved at lower temperatures than films without crystalline polymers while maintaining the structural integrity of the film.

Preferably the crystallisable vinyl block copolymer comprises at least blocks $[A]_x[B]_y$, wherein at least a crystallisable block [A] is obtained by a controlled radical polymerisation of at least one vinyl monomer via a reversible addition-fragmentation chain transfer (RAFT) mechanism in solution, in the presence of a control agent and a source of free radicals; and wherein the block copolymer comprises:

a) 15 to 99 wt % of a crystallisable block [A] comprising:

   i) 50 to 100 mol% of vinyl monomers bearing at least a crystallisable side chain;
   ii) 0 to 30 mol% of vinyl monomers bearing water dispersible functional groups;
   iii) 0 to 5 mol% of multiethylenically unsaturated vinyl monomers;
   iv) 0 to 80 mol% of vinyl monomers other than i), ii) and iii);

wherein i)+ii)+iii)+iv) = 100 mol%; and
b) 1 to 85 wt% of at least a block [B] comprising:

   i) 0 to 40 mol% of vinyl monomers bearing at least a crystallisable side chain;
   ii) 25 to 100 mol% of vinyl monomers bearing water dispersible functional groups;
   iii) 0 to 5 mol% of multiethylenically unsaturated vinyl monomers;
   iv) 0 to 75 mol% of vinyl monomers other than i), ii), and iii);

wherein i)+ii)+iii)+iv) = 100 mol%, and wherein a) +b) =100 wt% based on the weight of block [A] and block [B]; and where crystallisable block [A] has an average degree of polymerisation x, where x is an integer in the range of from 3 to 80;
where block [B] has an average degree of polymerisation y, where y is an integer $\geq 3$.

Preferably the crystallisable vinyl block copolymer comprises from 50 to 99 wt%, more preferably 65 wt% to 99 wt% and most preferably 75 to 99 wt% of a crystallisable block [A].

Preferably the crystallisable vinyl block copolymer comprises from 1 to 50 wt%, more preferably 1 to 35 wt% and most preferably 1 to 25 wt% of a block [B].

If the vinyl block copolymer is a block copolymer comprising at least blocks [A] and [B], blocks [A] and [B] can be prepared in any order.

Preferably the vinyl block copolymer comprises at least a block [A] consisting of a vinyl monomer bearing crystallisable monomers; and a block [B] comprising vinyl monomers selected from the group consisting of acrylates, methacrylates or other vinyl monomers; and optionally a third or more blocks.

According to another embodiment of the invention there is further provided an aqueous dispersion comprising a crystallisable block copolymer - polymer, wherein the block copolymer comprises at least blocks $[A]_x[B]_y$, wherein at least a crystallisable block [A] is obtained by a controlled radical polymerisation of at least one vinyl monomer via a reversible addition-fragmentation chain transfer (RAFT) mechanism in solution, in the presence of a control agent and a source of free radicals; and wherein the vinyl block copolymer comprises:

a) 15 to 99 wt % of crystallisable block [A] comprising:

> i) 50 to 100 mol% of vinyl monomers bearing at least a crystallisable side chain;
> ii) 0 to 30 mol% of vinyl monomers bearing water dispersible functional groups;
> iii) 0 to 5 mol% of multiethylenically unsaturated vinyl monomers;
> iv) 0 to 80 mol% of vinyl monomers other than i), ii) and iii);

wherein i)+ii)+iii)+iv) = 100 mol%;
b) 1 to 85 wt% of block [B] comprising:

> i) 0 to 40 mol% of vinyl monomers bearing at least a crystallisable side chain;
> ii) 25 to 100 mol% of vinyl monomers bearing water dispersible functional groups;
> iii) 0 to 5 mol% of multiethylenically unsaturated vinyl monomers;
> iv) 0 to 75 mol% of vinyl monomers other than i), ii), and iii);

wherein i)+ii)+iii)+iv) = 100 mol%; and wherein a) +b) =100 wt% based on the weight of block [A] and block [B]; and wherein crystallisable block [A] has an average degree of polymerisation x, where x is an integer in the range of from 3 to 80;
wherein block [B] has an average degree of polymerisation y, where y is an integer $\geq 3$; and
wherein the vinyl polymer [P] is prepared by free radical emulsion polymerisation in the presence of blocks $[A]_x[B]_y$ wherein polymer [P] comprises:

> ii) 0 to 5 wt% of vinyl monomers bearing water dispersible functional groups;
> iii) 0 to 5 wt% of multiethylenically unsaturated vinyl monomers;
> iv) 0 to 60 wt% of vinyl monomers other than i), ii), iii) and v);
> v) 40 to 100 wt% of $C_1$ to $C_{10}$ alkyl (meth)acrylates; and

wherein ii)+iii)+iv)+v)=100 wt%; and
wherein the block copolymer : polymer weight ratio is in the range of from 10:90 to 70:30.

The average degree of polymerisation x (or y) is determined by the total molar amount of monomers in block [A] (or [B]) divided by the total molar amount of control (e.g. RAFT) agent.

Preferably integer x is in the range of from 4 to 70, more preferably 5 to 60 and most preferably 8 to 35. Preferably integer y is the range of from 5 to 500, more preferably 10 to 300 and most preferably 15 to 200. Preferably y > x. Preferably the y : x ratio is in the range of from 10:90 to 90:10, more preferably in the range of from 20:80 to 80:20 and most preferably in the range of from 30:70 to 70:30. The advantage of having such y : x ratio for block [A] to block [B] is the provision of a good balance between water dispersability, amount of crystallinity and the coating performance in terms of non-tackiness, water sensitivity and for instance heat sealability.

Preferably the aqueous dispersion according to the invention comprises in the range of from 10 to 70 wt%, more preferably 13 to 55 wt% and most preferably 15 to 45 wt% of blocks $[A]_x[B]_y$ together, based on the weight of blocks $[A]_x[B]_y$ and vinyl polymer [P]. The wt% of the vinyl block copolymer having a $[A]_x[B]_y$ architecture, based on the total amount of vinyl block copolymer and vinyl polymer is preferably selected to maintain optimal balance between the level of crystallinity that the block copolymer imparts to the coating; and the good coating performance properties provided by vinyl polymer [P] (e.g. film formation and mechanical properties).

The vinyl block copolymer and the vinyl polymer are derived from free-radically polymerisable vinyl monomers, which are also usually referred to as vinyl monomers, and can contain polymerised units of a wide range of such vinyl monomers, especially those commonly used to make binders for the coatings industry.

Preferred vinyl monomers bearing crystallisable side chains (block [A] or [B], component i) in the vinyl block copolymer) are monomers with side chains containing in total at least 5 times as many carbon atoms as the backbone of the monomer, particularly side chains comprising linear polymethylene moieties containing 10 to 50, especially 14 to 22 carbon atoms, or linear perfluorinated or substantially perfluorinated polymethylene moieties containing 10 to 50 carbon atoms. Such monomers include linear aliphatic acrylates or methacrylates containing between 12 to 50, preferably between 14 to 22 carbon atoms, or their equivalent monomers such as acrylamides or methacrylamides with same amount of carbon atoms. Other preferred vinyl monomers bearing crystallisable side chains include vinyl esters of carboxylic acids where the carboxylic acid group contains between 10 to 20 carbon atoms. In a preferred embodiment the vinyl monomer bearing crystallisable side chains is selected from the group consisting of dodecyl (meth)acrylate, hexadecyl (meth)acrylate, tetradecyl (meth)acrylate, octadecyl (meth)acrylate, docosyl (meth)acrylate, and/or mixtures thereof.

Preferably the crystallisable block [A] comprises in a range from 75 to 100 mol% and more preferably from 90 to 100 mol% of vinyl monomers bearing crystallisable side chains.

The total content of crystallisable vinyl monomers in the vinyl block copolymer- polymer is from 2 to 45 wt% and most preferably from 5 to 40 wt%.

Examples of crystallisable vinyl monomers, if present, in block [B] may be the same as for crystallisable block [A].

The vinyl polymer [P] does not contain crystallisable vinyl monomers i) since they do not pass through the aqueous phase, as they are so hydrophobic that can not be suitably polymerised by an emulsion polymerisation even by using surfactant.

The vinyl monomers bearing water dispersible functional groups (block [A] and [B], component ii) in the vinyl block copolymer) may have non-ionic, ionic or potentially ionic water dispersible functional groups. Examples of vinyl monomers bearing water dispersible functional groups present in block [B] in the vinyl block copolymer may be the same as for crystallisable block [A].

Preferably the water dispersible groups of the vinyl monomers bearing ionic or potentially ionic functional groups in the vinyl block copolymer need to be in their dissociated (i.e. salt) form to be able to water-disperse. If they are not dissociated they are considered as potential ionic groups which become ionic upon dissociation. The ionic water dispersible groups are preferably fully or partially in the form of a salt in the final composition of the invention. Ionic water dispersible groups include cationic water dispersible groups such as basic amine groups, quaternary ammonium groups and anionic water dispersible groups such as acid groups, for example phosphoric acid groups, sulphonic acid groups, and carboxylic acid groups.

Preferred ionic water dispersible groups are anionic.

Preferred vinyl monomers bearing ionic or potentially ionic water dispersible functional groups of component ii), block [A] in the vinyl block copolymer include (meth)acrylic acid, itaconic acid, maleic acid, β-carboxyethyl acrylate, monoalkyl maleates (for example monomethyl maleate and monoethyl maleate), citraconic acid, styrenesulphonic acid, vinylbenzylsulphonic acid, vinylsulphonic acid, acryloyloxyalkyl sulphonic acids (for example acryloyloxymethyl sulphonic acid), 2-acrylamido-2-alkylalkane sulphonic acids (for example 2-acrylamido-2-methylethanesulphonic acid), 2-methacrylamido-2-alkylalkane sulphonic acids (for example 2-methacrylamido-2-methylethanesulphonic acid), mono(acryloyloxyalkyl)phosphates (for example, mono(acryloyloxyethyl)phosphate and mono(3-acryloyloxypropyl)phosphates) and mono(methacryloyloxyalkyl)phosphates, and/or mixtures thereof.

The vinyl monomers bearing non-ionic water dispersible groups are preferably pendant polyoxyalkylene groups, more preferably polyoxyethylene groups such as methoxy(polyethyleneoxide (meth)acrylate) or hydroxyalkyl (meth) acrylates such as hydroxyethyl (meth)acrylate (HE(M)A).

Preferred vinyl monomers providing non-ionic water dispersible groups include alkoxy polyethylene glycol (meth)acrylates, hydroxy polyethylene glycol (meth)acrylates, alkoxy prolyproplene glycol (meth)acrylates and hydroxy polypropylene glycol (meth)acrylates, preferably having a number average molecular weight of from 350 to 3000 g/mol. Examples of such vinyl monomers which are commercially available include ω-methoxypolyethylene glycol (meth)acrylate. Other vinyl monomers providing non-ionic water dispersible groups include (meth)acrylamidemono(methacryloyloxyethyl)phosphate).

Preferably the crystallisable block [A] comprises in a range from 0 to 15 mol%, more preferably 0 to 5 mol%, even more preferably 0 to 3 mol% and most preferably ≤ 0.5 mol% of vinyl monomers bearing water dispersible functional groups.

Examples of vinyl monomers bearing water dispersible functional groups in the polymer [P] (component ii)) may be the same as for the vinyl monomers bearing water dispersible functional groups of block [A] or [B], component ii) in the vinyl block copolymer.

Examples of multiethylenically unsaturated vinyl monomer (block [A] or [B], component iii) in the vinyl block copolymer) include ethylene glycol diacrylate, ethylene glycol dimethacrylate, triethylene glycol dimethacrylate, tetraethylene glycol dimethacrylate, 1,3-butylene, glycol dimethacrylate, trimethylolpropane triacrylate, trimethylol propane trimethacrylate, 1,4-butanediol diacrylate, 1,4-butanediol dimethacrylate, neopentyl glycol diacrylate, neopentyl glycol dimethacrylate, 1,6-hexanediol diacrylate, 1,6-hexanediol dimethacrylate, pentaerythritol diacrylate, pentaerythritol dimethacrylate, glycerin diacrylate, glycerin dimethacrylate, allyl acrylate, allyl methacrylate, diallyl phthalate, 1,3-butadiene, isoprene, divinyl benzene, and/or mixtures thereof.

Examples of multiethylenically unsaturated vinyl monomers in the polymer (component iii)) may be the same as for the multiethylenically unsaturated vinyl monomers of block [A] or [B], component iii) in the vinyl block copolymer.

Examples of component iv) of block [B] may be the same as for the vinyl monomers present in crystallisable block [A], component iv) in the vinyl block copolymer.

Examples of other vinyl monomers (block [A] or [B], component iv) in the vinyl block copolymer) include, aromatic vinyl monomers such as styrene, α-methyl styrene; vinyl monomers such as acrylonitrile, methacrylonitrile; vinyl halides such as vinyl chloride; vinylidene halides such as vinylidene chloride; vinyl esters such as vinyl acetate, vinyl propionate, vinyl laurate; vinyl esters of versatic acid such as VeoVa 9 and VeoVa 10 (VeoVa is a trademark of Resolution); heterocyclic vinyl compounds; alkyl esters of mono-olefinically unsaturated dicarboxylic acids such as di-n-butyl maleate and di-n-butyl fumarate and, in particular, esters of acrylic acid and methacrylic acid of formula $CH_2=CR^5\text{-}COOR^4$ wherein $R^5$ is H or methyl and $R^4$ is optionally substituted $C_1$ to $C_{20}$ other than those defined in crystallisable block [A], compound i), more preferably $C_1$ to $C_8$, alkyl, cycloalkyl, aryl or (alkyl)aryl which are also known as acrylic monomers, examples of which are methyl (meth)acrylate, ethyl (meth)acrylate, butyl (meth)acrylate (all isomers), 2-ethylhexyl (meth)acrylate, isopropyl (meth)acrylate, propyl (meth)acrylate (all isomers), and hydroxyalkyl (meth)acrylates such as hydroxyethyl (meth)acrylate, 2-hydroxypropyl (meth)acrylate, 4-hydroxybutyl (meth)acrylate and their modified analogues like Tone M-100 (Tone is a trademark of Union Carbide Corporation), and/or mixtures thereof.

Preferably the crystallisable block [A] comprises in a range from 0 to 60 mol% of of vinyl monomers other than components i), ii) and iii).

Examples of other vinyl monomers in the polymer [P] (component iv)) include 1,3-butadiene, isoprene, divinyl benzene, aromatic vinyl monomers such as styrene, $\alpha$-methyl styrene; vinyl monomers such as acrylonitrile, methacrylonitrile; vinyl halides such as vinyl chloride; vinylidene halides such as vinylidene chloride; vinyl esters such as vinyl acetate, vinyl propionate, vinyl laurate; vinyl esters of versatic acid such as VeoVa 9 and VeoVa 10 (VeoVa is a trademark of Resolution); and/or heterocyclic vinyl compounds.

Examples of $C_1$ to $C_{10}$ alkyl (meth)acrylates in the vinyl polymer [P] (component v)) include esters of acrylic acid and methacrylic acid of formula $CH_2=CR^5\text{-}COOR^4$ wherein $R^5$ is H or methyl and $R^4$ is optionally substituted more preferably $C_1$ to $C_8$, alkyl, cycloalkyl, aryl or (alkyl)aryl which are also known as acrylic monomers, examples of which are methyl (meth)acrylate, ethyl (meth)acrylate, butyl (meth)acrylate (all isomers), 2-ethylhexyl (meth)acrylate, isopropyl (meth)acrylate, propyl (meth)acrylate (all isomers).

Preferably polymer [P] comprises in a range from 55 to 100 wt% and more preferably 70 to 100 wt% of $C_1$ to $C_{10}$ alkyl (meth)acrylate monomers.

Whatever its precise chemical composition or architecture, the vinyl block copolymer is prepared according to a controlled radical polymerisation process carried out in the presence of a control agent.

The term "controlled radical polymerisation" is to be understood as a specific radical polymerisation process, also denoted by the term of "living radical polymerisation", in which use is made of control agents, such that the vinyl block copolymer chains being formed are functionalised by end groups capable of being reactivated in the form of free radicals by virtue of reversible transfer or reversible termination reactions.

Controlled radical polymerisation processes in which reversible deactivation of radicals proceeds by reversible transfer reactions include for example the process for radical polymerisation controlled by control agents, such as reversible transfer agents of the dithioester (R-S-C(=S)-R') type as described in WO 98/01478 and WO 99/35178, the process for radical polymerisation controlled by reversible transfer agents of trithiocarbonate (R-S-C(=S)-S-R') type as described in for example WO 98/58974, the process for radical polymerisation controlled by reversible transfer agents of xanthate (R-S-C(=S)-OR') type as described in WO 98/58974, WO 00/75207 and WO 01/42312, and the process for radical polymerisation controlled by reversible transfer agents of dithiocarbamate (R-S-C(=S)-NR1 R2) type as described for example in WO 99/31144 and WO 99/35177.

Such controlled radical polymerisations are known in the art as reversible addition-fragmentation chain transfer (RAFT) polymerisation (WO 98/01478; Macromolecules 1998 31, 5559-5562) or macromolecular design via interchange of xanthates (MADIX) polymerisation (WO 98/58974; Macromolecular Symposia 2000 150, 23-32).

"Addition-fragmentation" is a two-step chain transfer mechanism wherein a radical addition is followed by fragmentation to generate a new radical species.

When preparing the vinyl block copolymer of the invention in the presence of the control agent, the end of the growing block is provided with a specific functionality that controls the growth of the block by means of reversible free radical deactivation. The functionality at the end of the block is of such a nature that it can reactivate the growth of the block in a second and/or third stage of the polymerisation process with other vinyl monomers providing a covalent bond between for example a first and second block [A] and [B] and with any further optional blocks.

Preferably the vinyl block copolymer of the invention is obtained from reversible addition-fragmentation chain transfer polymerisation employing as a control agent, a reversible transfer agent. The advantage of this type of polymerisation is a very good control over the architecture of the block copolymer, which makes it possible to build in a low amount of crystallisable monomers in a block, providing the same beneficial properties or even better than a higher amount of same type of crystallisable material would have when included in the polymeric backbone in an uncontrolled way.

Reversible transfer agents may be one or more compounds selected from the group consisting of dithioesters, thioethers-thiones, trithiocarbonates, dithiocarbamates, xanthates and mixtures thereof.

Preferably the vinyl block copolymer is obtained from a controlled radical polymerisation process, more preferably from reversible addition-fragmentation chain transfer polymerisation, employing a control agent having a group with formula -S-C(=S)-.

Preferably the vinyl block copolymer is obtained from a controlled radical polymerisation process, more preferably from reversible addition-fragmentation chain transfer polymerisation, employing a xanthate such as O-ethyl-S-(1-methoxycarbonyl)ethyl dithiocarbonate [RSC(=S)-OC$_2$H$_5$, where R = -CH(CH$_3$)-C(=O)-OCH$_3$] and / or S-(1-ethoxycarbonylethyl)O-ethyl xanthate [RSC(=S)-OC$_2$H$_5$, where R = -CH(CH$_3$)-C(=O)-OCH$_2$CH$_3$].

For clarity, control agents for use in RAFT do not include diphenylethylene, which although it is a control agent can not be used as a RAFT control agent, i.e. for a RAFT polymerisation mechanism.

Reversible transfer agents also include symmetrical transfer agents. An example is a dibenzyltrithiocarbonate such as C$_6$H$_4$CH$_2$-S-C(=S)-S-CH$_2$C$_6$H$_4$.

Preferably the vinyl block copolymer is obtained from a controlled radical polymerisation process, more preferably from reversible addition-fragmentation chain transfer polymerisation, employing xanthates and/or dibenzyltrithiocarbonate.

Control agents of the xanthate type have low transfer constants in the polymerisation of styrenes and in particular methacrylate type monomers which may result in a higher polydispersity and/or poor chain growth control of the resultant vinyl polymers and may be considered as less effective RAFT control agents, although the actual mechanism involved is similar to the reversible-addition fragmentation chain transfer (RAFT) mechanism described in WO 98/01478. Reversible transfer agents of the dithioester type like for example benzyl dithiobenzoate derivatives are generally considered as having a high transfer constant and being more effective RAFT control agents.

Transfer constants are described in WO98/01478. "Chain transfer constant" (Ctr) means the ratio of the rate constant for chain transfer ($k_{tr}$) to the rate constant for propagation ($k_\beta$) at zero conversion of monomer and chain transfer agent (CTA). If chain transfer occurs by addition-fragmentation, the rate constant for chain transfer (ktr) is defined as follows:

$$k_{tr} = k_{add} \times [k_\beta / (k_{-add} + k_\beta)]$$

where kadd is the rate constant for addition to the CTA and $k_{-add}$ and $k_\beta$ are the rate constants for fragmentation in reverse and forward directions respectively.

In an embodiment of the invention the control agent preferably has a transfer constant Ctr = ($k_{add}$/$k_p$) [$k_\beta$ / ($k_{add}$ + $k_\beta$)] of less than 50, more preferably less than 20 and most preferably below 10.

The process for radical polymerisation controlled by for example control agents of xanthate type may be carried out in bulk, in solution, in emulsion, in dispersion or in suspension. When preparing the vinyl block copolymer, the RAFT polymerisation process for obtaining crystallisable block [A] is performed in solution. The RAFT polymerisation process for obtaining block [B] may be performed in bulk or solution. Preferably the RAFT polymerisation process for obtaining block [B] is performed in solution. Solution polymerisation is a polymerisation process in which all the reaction components including the monomer(s), initiator and control agent are dissolved in a non-monomeric liquid solvent at the start of the reaction. By non-monomeric is meant a solvent that does not comprise monomers, in other words the solvent won't react as part of the polymerisation. Usually the solvent is also able to dissolve the vinyl polymer or copolymer that is being formed. By a solvent is meant water, organic solvents or mixtures thereof.

Preferred organic solvents include alcohols (such as ethanol, isopropanol, n-butanol, n-propanol, cyclohexanol), esters (such as ethyl acetate, propyl acetate, isopropyl acetate, butyl acetate), ketone solvents (such as acetone, methyl ethyl ketone, methyl isobutyl ketone), and glycols (such as butyl glycol). More preferred organic solvents include solvents selected from the group consisting of acetone, ethanol, methyl ethyl ketone, iso-propanol, ethyl acetate, butyl glycol and mixtures thereof. Preferably the solvent applied for the block copolymer preparation using the solution dispersion polymerisation process comprises an organic solvent with a low boiling point and or a high evaporation rate to allow fast removal of the organic solvent after the dispersion step under reduced pressure. Examples of such solvents include acetone, ethanol, isopropanol, methyl ethyl ketone and ethyl acetate.

Preferably the vinyl block copolymer is prepared according a solution dispersion polymerisation process, which comprises the preparation of the vinyl block copolymer in solution using a RAFT radical polymerisation process and the dispersion of the obtained vinyl block copolymer in water. Dispersion of the vinyl block copolymer in water can be performed by adding water to the vinyl block copolymer solution or by adding the vinyl block copolymer solution to water. Optionally suitable surfactants can be used to aid in the dispersion process. The vinyl block copolymer preferably comprises a minimal amount of water-dispersing groups needed to render the vinyl block copolymer self-dispersible in water. After the vinyl block copolymer is dispersed in water the remaining solvent can optionally be removed for example under reduced pressure.

Furthermore after preparation of a first block, the prepared block can be purified from residual monomers and subsequently used for the polymerisation a second monomer composition as a second block or the second monomer composition can be polymerised directly after the preparation of first block is completed. In this case at least 80 wt%, preferably at least 90 wt% and most preferably at least 95 wt% of the first block monomer composition is reacted before the second monomer composition is reacted. The second block can contain up to 20 wt% (preferably 10 wt% or less) of the first monomer composition.

The vinyl block copolymer- polymer is obtained by aqueous free radical polymerisation of one or more vinyl monomers in the presence of the vinyl block copolymer. The polymer is preferably prepared by free radical polymerisation. The free radical polymerisation can be performed by techniques well known in the art, for example, as emulsion polymerisation, solution polymerisation, suspension polymerisation or bulk polymerisation. General methods for preparing aqueous vinyl polymers are reviewed in the Journal of Coating Technology, volume 66, number 839, pages 89 to 105 (1995). Furthermore the free radical polymerisation may be carried out as a batch or as a semi-continuous polymerisation process.

Vinyl polymer [P] is prepared using a free radical emulsion polymerisation process in the presence of the vinyl block copolymer where optionally the control agent functional group, located at one of the chain ends of the prepared vinyl block copolymer $[A]_x [B]_y$, can be deactivated or removed prior to the preparation of vinyl polymer [P]. This optional deactivation or removal of the control agent can occur before or after dispersion of the vinyl block copolymer and before or after the vinyl polymer preparation. Preferably the control agent is removed before dispersion of the vinyl block copolymer. When a RAFT agent is used as control agent, the RAFT group can be deactivated or removed via for example oxidation reactions, radical induced reactions, hydrolysis, or aminolysis. In the case that the control agent functional group is not removed or only partially removed prior to the preparation of vinyl polymer [P] at least part of the vinyl polymer [P] chains will grow onto or become covalently attached to at least part of the vinyl block copolymer chains.

The vinyl block copolymer and vinyl polymer of the invention dispersion are preferably covalently bound to each other, however the aqueous dispersion of the invention may also contain free vinyl block copolymer and free vinyl polymer. For clarity, the total amount of vinyl block copolymer or vinyl polymer are intended to cover the covalently bound as well as the free vinyl block copolymer or vinyl polymer. In the same manner, the terms amount of monomers in the vinyl block copolymer or vinyl polymer are intended to cover the covalently bound combination of the vinyl block copolymer and the vinyl polymer, as well as the free vinyl block copolymer or vinyl polymer.

Preferably the aqueous dispersion comprises:

a) 10 to 100 wt% of covalently bound vinyl block copolymer- polymer,
b) 0 to 40 wt of free vinyl block copolymer;
c) 0 to 90 wt% of free vinyl polymer;

wherein a) + b) + c) add up to 100%.

Even more preferably the aqueous dispersion comprises:

a) 20 to 100 wt% of covalently bound vinyl block copolymer- polymer;
b) 0 to 40 wt of free vinyl block copolymer,
c) 0 to 80 wt% of free vinyl polymer;

wherein a) + b) + c) add up to 100%.

The weight % ratio of vinyl block copolymer to vinyl polymer (whether covalently bound together or free) is preferably in the range of from 10 : 90 to 70 : 30, more preferably 13 : 87 to 55 : 45, and most preferably 15 : 85 to 45 : 55.

Preferably the chain end functionality of the vinyl block copolymer is retained to assist with the covalent bond formation between the vinyl block copolymer and any further optional blocks and/or vinyl polymer [P]. The chain end functionality of the vinyl block copolymer may be a RAFT group (-S-C(=S)-) or a thiol (-SH) group or any other group derived from the RAFT control agent that can provide covalent bond formation between the vinyl block copolymer and vinyl polymer [P].

Vinyl polymer [P] is preferably prepared using a free radical emulsion polymerisation process in the presence of the vinyl block copolymer $[A]_x[B]_y$ where the vinyl polymer [P] is preferably grown from or grafted onto the vinyl block copolymer. Preferably at least 20 wt%, more preferably $\geq$ 30 wt%, even more preferably $\geq$ 40 wt% and most preferably $\geq$ 50 wt% of vinyl polymer [P] is covalently bound to the vinyl block copolymer.

The covalent bond formation between the vinyl block copolymer and the vinyl polymer preferably takes place during the preparation of the vinyl polymer.

In another embodiment of the invention there is provided a method for preparing an aqueous dispersion comprising vinyl block copolymer- polymer, where the vinyl block copolymer comprises crystallisable monomers, wherein said method comprises the following steps:

1. synthesis in a solvent by means of a controlled radical polymerisation process of a first crystallisable block [A] comprising vinyl monomers bearing crystallisable side chains, followed by the polymerisation of at least a second block [B] to obtain an vinyl block copolymer. The order of preparation of block [A] and [B] can also be reversed;

2. optional removal of the RAFT agent before dispersing the vinyl block copolymer in water;

3. dispersion of the block copolymer in water, by adding either water to the vinyl block copolymer or adding the vinyl block copolymer to water, wherein the vinyl block copolymer can be either self-dispersing or can be dispersed using surfactants;

4. performing a free radical emulsion polymerisation process in the presence of the vinyl block copolymer dispersion prepared as in step 3, and

wherein after each of steps 2 to 4 the solvent can be removed from the aqueous dispersion.

Another option for step 2 is that after step 1 the solvent is removed by a suitable method to get a dry powder, which powder can be afterwards dispersed into water.

A free radical polymerisation of vinyl monomers to make either the vinyl block copolymer and/or the vinyl polymer will require the use of a source of free radicals (i.e. an initiator) to initiate the polymerisation. Suitable free-radical-yielding initiators include inorganic peroxides such as potassium, sodium or ammonium persulphate, hydrogen peroxide, or percarbonates; organic peroxides, such as acyl peroxides including e.g. benzoyl peroxide, alkyl hydroperoxides such as t-butyl hydroperoxide and cumene hydroperoxide; dialkyl peroxides such as di-t-butyl peroxide; peroxy esters such as t-butyl perbenzoate; mixtures may also be used. The peroxy compounds are in some cases advantageously used in combination with suitable reducing agents (redox systems) such as potassium or sodium pyrosulphite or bisulphite, and iso-ascorbic acid. Metal compounds such as Fe.EDTA (EDTA is ethylene diamine tetracetic acid) may also be usefully employed as part of the redox initiator system. Azo functional initiators may also be used. Preferred azo initiators include 2,2'-azobis(isobutyronitrile) (AIBN), 2,2'-azobis(2-methyl-butyronitrile) (AMBN), 2,2'-azobis(2-methylpropionamidine) dihydrochloride and 4,4'-azobis(4-cyanovaleric acid). It is possible to use an initiator partitioning between the aqueous and organic phases, e.g. a combination of t-butyl hydroperoxide, iso-ascorbic acid and Fe.EDTA. Preferred initiators for the vinyl block copolymer preparation include azo functional initiators such as for example AMBN and 4,4'-azobis(4-cyanovaleric acid) and 2,2'-azobis(2-methylpropionamidine) dihydrochloride. Preferred initiators for the vinyl polymer preparation include azo functional initiators such as AMBN, 4,4'-azobis(4-cyanovaleric acid) and 2,2'-azobis(2-methylpropionamidine) dihydrochloride, and alkyl hydroperoxides such as t-butyl hydroperoxide, preferably combined with a reducing agent such as iso-ascorbic acid. The amount of initiator or initiator system to use is conventional, e.g. within the range 0.05 to 6 wt% based on the total vinyl monomer(s) used. A further amount of initiator may optionally be added at the end of the polymerisation process to assist the removal of any residual vinyl monomers.

A chain transfer agent may be added to control the molecular weight of the vinyl block copolymer and/or vinyl polymer. Suitable chain transfer agents include mercaptans such as n-dodecylmercaptan, n-octylmercaptan, t-dodecylmercaptan, mercaptoethanol, iso-octyl thioglycolurate, $C_2$ to $C_8$ mercapto carboxylic acids and esters thereof such as 3-mercaptopropionic acid and 2-mercaptopropionic acid; and halogenated hydrocarbons such as carbon tetrabromide and bromotrichloromethane. Preferably no chain transfer agent is added during the preparation of the vinyl block copolymer.

Surfactants can be utilised in order to assist in the dispersion of the emulsification of the vinyl block copolymer - polymer in water (even if self-dispersible). Suitable surfactants include but are not limited to conventional anionic, cationic and/or nonionic surfactants and mixtures thereof such as Na, K and $NH_4$ salts of dialkylsulphosuccinates, Na, K and $NH_4$ salts of sulphated oils, Na, K and $NH_4$ salts of alkyl sulphonic acids, Na, K and $NH_4$ alkyl sulphates, alkali metal salts of sulphonic acids; fatty alcohols, ethoxylated fatty acids and/or fatty amides, and Na, K and $NH_4$ salts of fatty acids such as Na stearate and Na oleate. Other anionic surfactants include alkyl or (alk)aryl groups linked to sulphonic acid groups, sulphuric acid half ester groups (linked in turn to polyglycol ether groups), phosphonic acid groups, phosphoric acid analogues and phosphates or carboxylic acid groups. Cationic surfactants include alkyl or (alk)aryl groups linked to quaternary ammonium salt groups. Nonionic surfactants include polyglycol ether compounds and preferably polyethylene oxide compounds as disclosed in "nonionic surfactants - Physical chemistry" edited by M.J. Schick, M. Decker 1987.

Optionally the emulsifier can be added either at the beginning of polymerisation or as a post-stabiliser, at a level of 0.5 to 5 wt%. Preferably a cationic or nonionic surfactant is used, most preferably a nonionic surfactant is used.

If desired the aqueous dispersion of the invention can be used in combination with other polymer compositions which are not according to the invention. Furthermore the composition of the invention is particularly suitable for use in coating applications in which it may provide a key part of coating compositions or formulations. Such coating compositions can be pigmented or unpigmented.

The aqueous dispersion of the invention may contain conventional ingredients, some of which have been mentioned above; examples include pigments, dyes, emulsifiers, surfactants, plasticisers, thickeners, heat stabilisers, levelling agents, anti-cratering agents, fillers sedimentation inhibitors, UV absorbers, antioxidants, drier salts, organic co-solvents, and wetting agents introduced at any stage of the production process or subsequently. It is possible to include an amount of antimony oxide in the dispersion to enhance the fire retardant properties.

Suitable organic co-solvents which may be added during the process or after the process during formulation steps are well known in the art and include for example xylene, toluene, methyl ethyl ketone, acetone, ethanol, isopropanol, ethyl acetate, butyl acetate, diethylene glycol, ethylene diglycol, butyl glycol, butyl diglycol and 1-methyl-2-pyrrolidinone.

Preferably the aqueous dispersion of the invention comprises 0 to 50 wt%, more preferably 0 to 40 wt% and most preferably 0 to 35 wt% of organic co-solvent by weight of the vinyl block copolymer- polymer.

The solids content of the aqueous dispersion of the invention is preferably within the range of from 20 to 60 wt%, and most preferably within the range of from 30 to 50 wt%.

The composition of the invention can be used in applications where property changes like hardness, permeability and flow at a defined temperature can be beneficial i.e. adhesives, coatings, films, cosmetics, inks. The composition can be especially useful to increase for instance heat sealability that is required for a film coating when used for packaging purposes.

The aqueous dispersion of the invention may be applied to a variety of substrates including wood, board, metals, stone, concrete, glass, cloth, leather, paper, plastics, and foam by any conventional method including brushing, dipping, flow coating, spraying, flexo printing, gravure printing, any other graphic arts application methods and the like. In case of a heat sealable film coating the substrate is selected from the group consisting of treated polyethylene or treated polypropylene, polyester, polyamide, polyurethane and polylactid acid films. The aqueous carrier medium is removed by natural drying or accelerated drying (by applying heat) to form a coating.

Accordingly, in a further embodiment of the invention there is provided a coating or a polymeric film obtained from an aqueous dispersion of the invention.

The present invention is now illustrated by reference to the following examples. Unless otherwise specified, all parts, percentages and ratios are on a weight basis. Molecular weights were determined by GPC using polystyrene standards and THF as eluent.

<u>EXAMPLES</u>

| Vinyl block copolymer 1 | = | poly(acrylic acid)-poly(stearyl acrylate) block copolymer with a target degree of polymerisation of respectively y=10 and x=20. |
|---|---|---|
| Vinyl block copolymer 2 | = | poly(acrylic acid)-poly(stearyl acrylate-co-butyl acrylate) block copolymer with a target degree of polymerisation of respectively y=10 and x=30. |
| Example 1 | = | MMA / BA (Tg = 10°C) vinyl polymer composition prepared in the presence of vinyl block copolymer 1 by a free radical emulsion polymerisation process. |
| Example 2 | = | MMA / BA (Tg = 10 °C) vinyl polymer composition prepared in the presence of vinyl block copolymer 2 by a free radical emulsion polymerisation process. |
| Example 3 | = | S/EA/MMA (Tg = 50°C) vinyl polymer composition prepared in the presence of vinyl block copolymer 1 by a free radical emulsion polymerisation process. |

In the examples, the following abbreviations and terms are specified:

| | |
|---|---|
| DP ([A]x[B]y) | = degree of polymerisation (x and y respectively) |
| AA | = acrylic acid |
| StA | = stearyl acrylate (available from Aldrich) |
| S | = styrene |
| EA | = ethyl acrylate |
| BA | = butyl acrylate |
| MMA | = methyl methacrylate |
| MEK | = methyl ethyl ketone |
| AIBN | = 2,2'-azobis(isobutyronitrile) |
| xanthate 1 | = O-ethyl-S-(1-methoxycarbonyl)ethyl dithiocarbonate (Rhodixan A1, provided by Rhodia) |

Vinyl block copolymer 1

Synthesis of a diblock copolymer based on acrylic acid and stearyl acrylate with a target DP for AA of y=10 and for StA of x=20

Block [B]:

470 gram of MEK and 38.5 gram (186 mmol) of xanthate 1 were added to a 1 L three-necked glass flask equipped with condenser cooler, temperature measuring probe and stirring device. The reaction mixture was degassed by purging with nitrogen at room temperature for 15 minutes while stirring. The temperature was raised to 70°C and 5 wt% of a monomer feed mixture of 133.8 gram (1.86 mol) of AA and 46.7 gram of MEK was added to the reaction mixture. Then 2.6 gram (approximately 7 mmol) of 4,4'-azobis(4-cyanovaleric acid) (Aldrich, 75+ %) was added as a slurry in 5 gram MEK. After 10 minutes the gradual addition was started of the remaining 95 wt% of the AA / MEK mixture. The addition lasted 4 hours under a nitrogen stream and at a controlled temperature of 70°C. At the end of the monomer feed the temperature was raised to 80 °C and kept at this temperature for 2 hours. The reaction mixture was then cooled to 20 °C and a sample was withdrawn for further analysis. The conversion of AA as determined with gas chromatography was found to be 94 % and the final solids content was experimentally determined at 30 wt%. GPC analyses of the final product resulted in the following values: Mn = 1080 g/mol, PDI =1.18.

Crystallisable block [A]:

30.0 gram of the block [B] reaction mixture (poly(acrylic acid) in MEK, 30 % solids) was added to a 250 mL three-necked glass flask equipped with condenser cooler, temperature measuring probe and magnetic stirring device. The reaction mixture was degassed by purging with nitrogen at room temperature for 15 minutes while stirring. The temperature was raised to 75°C and 10 wt% of a monomer feed mixture of 54.0 gram (166.4 mmol) of StA and 65.0 gram of MEK was added to the reaction mixture. Then 1.35 gram of a 10 wt% solution of AIBN in MEK was added. After 30 minutes 10 gram of ethanol was added and the gradual addition was started of the remaining 90 wt% of the StA / MEK mixture. The addition lasted 4 hours under a nitrogen stream at a controlled temperature of 75°C. At the end of the monomer feed 1.35 gram of a 10 wt% solution of AIBN in MEK was added and the reaction mixture was kept for another 5 hours at 75°C. At the end of the reaction additional MEK was added to the reaction mixture, after which the mixture was cooled resulting in a white solid like material with a solids content experimentally determined at 44 wt%. Analysis of the final reaction mixture gave a final conversion of 99 % for StA (determined with liquid chromatography analyses). GPC analyses of the final product resulted in the following values: Mn = 6300 g/mol, PDI = 1.46.

Vinyl block copolymer 2

Synthesis of a diblock copolymer based on acrylic acid and (stearyl acrylate-co-butyl acrylate) with a target DP for AA of y=10 and for (StA-co-BA) of x=30

Vinyl block copolymer 2 was prepared from block [B] according the same recipe and procedure as given for vinyl block copolymer 1, where 20 wt% of the StA was replaced by BA for the preparation of crystallisable block [A]. Analysis of the final reaction mixture gave a final conversion of 99 % for StA (as determined with liquid chromatography) and 97 % for BA (as determined with gas chromatography). The solids content was experimentally determined at 48 wt%. GPC analyses of the final product resulted in the following values: Mn = 6015 g/mol, PDI = 1.40.

Preparation of an aqueous dispersion of vinyl block copolymer 1

3.3 gram of triethylamine was added to 50.0 gram of vinyl block copolymer 1 at 45°C whilst stirring, followed by the gradual addition of 77 gram of demineralised water of 50°C. A stable aqueous dispersion was obtained, which was then cooled to 20 °C. After removal of residual MEK and ethanol from the dispersion under reduced pressure (rotary evaporation) and extra addition of demineralised water the final solids content was experimentally determined at 20 wt%. The average particle size was 42 nm (as determined with light scattering).

Preparation of an aqueous dispersion of vinyl block copolymer 2

4.0 gram of triethylamine was added to 50.0 gram of vinyl block copolymer 2 at 45 °C whilst stirring, followed by the gradual addition of 70 gram of demineralised water of 50°C. A stable aqueous dispersion was obtained, which was then cooled to 20 °C. After removal of residual MEK and ethanol from the dispersion under reduced pressure (rotary evaporation) and extra addition of demineralised water the final solids content was experimentally determined at 20 wt%. The average particle size was 51 nm (as determined with light scattering).

Example 1: Synthesis of an vinyl block copolymer- polymer (Tg=10°C) based on vinyl block copolymer 1

35.8 gram of demineralised water and 36.4 gram of the aqueous dispersion of vinyl block copolymer 1 prepared above (20 % in water) were added to a 250 mL three-necked glass flask equipped with condenser cooler, temperature measuring probe and magnetic stirring device. The reaction mixture was heated while stirring to 85°C under nitrogen atmosphere. At 85 °C a monomer mixture consisting of in total 19.6 gram MMA and 16.8 gram BA, and an initiator mixture consisting of in total 0.1 gram APS, 0.6 gram sodium lauryl sulphate (30 wt% in water) and 12 gram demineralised water were gradually added to the reaction mixture over a time period of 2 hours. At the end of the addition the pH of the reaction mixture was adjusted from approximately 5.5 to 8 by the addition of 1.5 gram of triethylamine and the mixture was then kept for 1 hour at 85 °C. The resultant dispersion was then cooled to room temperature. Total final free monomer level was below 500 ppm. The properties of the final dispersion are given in Table 1 below.

Example 2: Synthesis of a vinyl block copolymer- polymer (Tg=10°C) based on vinyl block copolymer 2

A vinyl block copolymer- polymer based on vinyl block copolymer 2 was prepared using the process and monomer composition (MMA/BA, Tg = 10 °C) described above for example 1, and using the aqueous dispersion of vinyl block copolymer 2 as described above. The properties of the obtained dispersion from example 2 are given in Table 1 below.

Example 3: Synthesis of a vinyl block copolymer- Polymer (Tg =50°C) based on vinyl block copolymer 1

35.8 gram of demineralised water and 36.4 gram of the aqueous dispersion of vinyl block copolymer 1 prepared above (20 % in water) were added to a 250 mL three-necked glass flask equipped with condenser cooler, temperature measuring probe and magnetic stirring device. The reaction mixture was heated while stirring to 85°C under nitrogen atmosphere. At 85 °C a monomer mixture consisting of in total 3.6 gram S, 12 gram EA and 20.7 gram BA, and an initiator mixture consisting of in total 0.1 gram APS, 0.6 gram sodium lauryl sulphate (30 wt% in water) and 12 gram demineralised water were gradually added to the reaction mixture over a time period of 2 hours. At the end of the addition the pH of the reaction mixture was adjusted from approximately 5.5 to 8 by the addition of 1.5 gram of triethylamine and the mixture was then kept for 1 hour at 85 °C. The resultant dispersion was then cooled to room temperature. Total final free monomer level was below 500 ppm. The properties of the final dispersion are given in Table 1 below.

Table 1

| Example | Vinyl block copolymer | Solids (experimentally determined) | Final average particle size |
|---------|----------------------|-----------------------------------|----------------------------|
| 1 | 1 | 37 % | 92 nm |
| 2 | 2 | 37 % | 103 nm |
| 3 | 1 | 35 % | 60 nm |

Differential scanning calorimetry (DSC)

DSC analyses were performed to determine the melting temperature Tm of block [A] of the vinyl block copolymers and the obtained vinyl block copolymer- polymers. The samples were dried overnight at 100°C and then left for at least one hour at 20°C prior to analysis. Results for DSC analyses are given in Table 2 below.

Film surface tackiness

In order to determine the tackiness of the film surface the test sample was coated onto a Leneta test chart using a 100 micron diameter wire rod. The obtained films were then dried at room temperature for 1 hour. The tackiness of the film was then determined by pressing a thumb onto the film surface. The degree of film surface tackiness is expressed on a scale from 0 to 5, with 0 as very high film tackiness and 5 as very low film tackiness. Ideally, the film has very low film tackiness (5). The films which had tackiness rated with 4 and 5 were easily rolled and unrolled without damaging the film. Prior to testing the film was either held at room temperature for at least 1 hour, or heated in an oven at 60 °C for 30 minutes after which the tackiness was directly determined. Test results are given in Table 2 below.

Heat Sealability

In order to determine the possibility to use these systems for heat sealable coatings, a coating was prepared on a plastic substrate, sealed at a defined temperature and the force to pull the material apart was determined. For this purpose example 3 was applied on a coated oriented polypropylene film in a dry layer thickness of 1 $\mu$m. The sample was dried for 10 seconds at 80 °C, after which two pieces of coated substrate were sealed (with the coated sites onto each other). The films were sealed both for 60 seconds at 80 °C and 2 seconds at 130 °C at 40 PSI (flat jaws upper one heated). The films were then pulled apart using an Instron Tensiometer. The force needed is a measure for the sealability of the material. The force needed to pull the sample apart under the condition of 60 seconds at 80 °C was determined at 79 g/inch, the force needed for the condition of 2 seconds at 130 °C was 96 g/inch. This result showed that it is possible to prepare a sealable film from this material

Table 2

| Example | wt% StA on total solids | Tm (°C) | Film surface tackiness[1] at 20°C | Film surface tackiness[1] at 60 °C |
|---|---|---|---|---|
| Block copolymer 1 | 85% | 47 | 5 | 0 |
| Block copolymer 2 | 68% | 38 | 5 | 0 |
| Example 1 | 14% | 46 | 5 | 4 |
| Example 2 | 11% | 36 | 5 | 4 |
| Example 3 | 14% | 46 | 5 | 5 |

**Claims**

1. An aqueous dispersion comprising a crystallisable vinyl block copolymer - polymer which comprises:

   i) a vinyl block copolymer comprising at least blocks $[A]_x[B]_y$, wherein at least a crystallisable block [A] is obtained by a controlled radical polymerisation of at least one vinyl monomer via a reversible addition-fragmentation chain transfer (RAFT) mechanism in solution, in the presence of a control agent and a source of free radicals; and wherein the vinyl block copolymer comprises 2 to 45 wt % of vinyl monomers bearing at least a crystallisable side chain by weight of the vinyl block copolymer - polymer;
   wherein vinyl monomers bearing crystallisable side chains are monomers with side chains containing in total at least 5 times as many carbon atoms as the backbone of the monomer;
   wherein crystallisable block [A] has an average degree of polymerisation x, wherein x is an integer in the range of from 3 to 80;
   wherein block [B] has an average degree of polymerisation y, wherein y is an integer $\geq$ 3; and
   ii) a vinyl polymer [P] obtained by the free radical emulsion polymerisation of one or more vinyl monomers in the presence of the vinyl block copolymer; and

   wherein the block copolymer : polymer weight ratio is in the range of from 10:90 to 70:30.

2. An aqueous dispersion according to claim 1 wherein the vinyl block copolymer comprises 15 to 99 wt% of a crystallisable block [A] comprising:

   i) 50 to 100 mol% of vinyl monomers bearing at least a crystallisable side chain;
   ii) 0 to 30 mol% of vinyl monomers bearing water dispersible functional groups;
   iii) 0 to 5 mol% of multiethylenically unsaturated vinyl monomers;
   iv) 0 to 80 mol% of vinyl monomers other than i), ii) and iii);

   wherein i)+ii)+iii)+iv) = 100 mol%.

3. An aqueous dispersion according to claim 1 or 2 wherein the vinyl block copolymer comprises 1 to 85 wt% of at least a block [B] comprising:

   i) 0 to 40 mol% of vinyl monomers bearing at least a crystallisable side chain;

ii) 25 to 100 mol% of vinyl monomers bearing water dispersible functional groups;
iii) 0 to 5 mol% of multiethylenically unsaturated vinyl monomers;
iv) 0 to 75 mol% of vinyl monomers other than i), ii), and iii);

wherein i)+ii)+iii)+iv) = 100 mol%.

4.  An aqueous dispersion according to any one of claims 1 to 3 wherein the vinyl polymer [P] comprises:

ii) 0 to 5 wt% of vinyl monomers bearing water dispersible functional groups;
iii) 0 to 5 wt% of multiethylenically unsaturated vinyl monomers;
iv) 0 to 60 wt% of vinyl monomers other than i), ii), iii) and v);
v) 40 to 100 wt% of $C_1$ to $C_{10}$ alkyl (meth)acrylates; and

wherein ii)+iii)+iv)+v)=100 wt%.

5.  An aqueous dispersion according to claim 1 comprising a crystallisable vinyl block copolymer - polymer which comprises:

a) 15 to 99 wt% of a crystallisable block [A] according to claim 2;
b) 1 to 85 wt% of at least a block [B] according to claim 3;

wherein a) +b) =100 wt% is based on the weight of block [A] and block [B]; and a vinyl polymer [P] according to claim 4.

6.  An aqueous dispersion according to any one of claim 1 to 5 wherein the Mw of the vinyl polymer [P] is greater than the Mw of the vinyl block copolymer.

7.  An aqueous dispersion according to any one of claims 1 to 6 wherein the Tm of crystallisable block [A] is $\leq$ 110°C.

8.  An aqueous dispersion according to any one of claims 1 to 7 where the vinyl polymer [P] has a calculated Tg $\geq$ 0 °C.

9.  An aqueous dispersion according to any one of claims 1 to 8 comprising:

a) 10 to 100 wt% of covalently bound crystallisable vinyl block copolymer - polymer;
b) 0 to 40 wt% of free crystallisable vinyl block copolymer,
c) 0 to 90 wt% of free vinyl polymer;

wherein a) + b) + c) add up to 100%.

10. An aqueous dispersion according to claim 9 where the covalently bound vinyl block copolymer- polymer has Mw $\geq$ 21,000 g/mol.

11. An aqueous dispersion according to anyone of the preceding claims wherein the control agent is selected from group consisting of dithioesters, thioethers-thiones, trithiocarbonates, dithiocarbamates, xanthates and mixtures thereof.

12. A process for preparing an aqueous dispersion comprising a crystallisable block copolymer - polymer; wherein the block copolymer comprises at least blocks $[A]_x[B]_y$, which comprises the following steps:

i) the synthesis of at least a crystallisable block [A] by a controlled radicals polymerisation of at least one vinyl monomer via a reversible addition-fragmentation chain transfer (RAFT) mechanism in solution, in the presence of a control agent and a source of free radicals;
wherein the vinyl block copolymer comprises 2 to 45 wt% of vinyl monomers bearing at least a crystallisable side chain by weight of the vinyl block copolymer - polymer;
wherein vinyl monomers bearing crystallisable side chains are monomers with side chains containing in total at least 5 times as many carbon atoms as the backbone of the monomer;
ii) dispersion of the block copolymer in water;
iii) synthesis of a polymer [P] by the free radical emulsion polymerisation of one or more vinyl monomers in the presence of the block copolymer dispersion prepared in step ii);

wherein the block copolymer : polymer weight ratio is in the range of from 10:90 to 70:30.

13. A process according to claim 12 for preparing an aqueous dispersion comprising a crystallisable block copolymer - polymer; wherein the block copolymer comprises at least blocks $[A]_x B]_y$, wherein at least a crystallisable block [A] is obtained by a controlled radical polymerisation of at least one vinyl monomer via a reversible addition-fragmentation chain transfer (RAFT) mechanism in solution, in the presence of a control agent and a source of free radicals; and wherein the vinyl block copolymer comprises:

a) 15 to 99 wt % of crystallisable block [A] comprising:

i) 50 to 100 mol% of vinyl monomers bearing at least a crystallisable side chain;
ii) 0 to 30 mol% of vinyl monomers bearing water dispersible functional groups;
iii) 0 to 5 mol% of multiethylenically unsaturated vinyl monomers;
iv) 0 to 80 mol% of vinyl monomers other than i), ii) and iii);
wherein i)+ii)+iii)+iv) = 100 mol%;

b) 1 to 85 wt% of block [B] comprising:

i) 0 to 40 mol% of vinyl monomers bearing at least a crystallisable side chain;
ii) 25 to 100 mol% of vinyl monomers bearing water dispersible functional groups;
iii) 0 to 5 mol% of multiethylenically unsaturated vinyl monomers;
iv) 0 to 75 mol% of vinyl monomers other than i), ii), and iii);
wherein i)+ii)+iii)+iv) = 100 mol%; and wherein a) +b) =100 wt% based on the weight of block [A] and block [B]; and
wherein crystallisable block [A] has an average degree of polymerisation x, where x is an integer in the range of from 3 to 80;
wherein block [B] has an average degree of polymerisation y, where y is an integer $\geq 3$; and

wherein the vinyl polymer [P] is prepared by free radical emulsion polymerisation in the presence of blocks $[A]_x [B]_y$ wherein polymer [P] comprises:

ii) 0 to 5 wt% of vinyl monomers bearing water dispersible functional groups;
iii) 0 to 5 wt% of multiethylenically unsaturated vinyl monomers;
iv) 0 to 60 wt% of vinyl monomers other than i), ii), iii) and v);
v) 40 to 100 wt% of $C_1$ to $C_{10}$ alkyl (meth)acrylates; and wherein ii)+iii)+iv)+v)=100 wt%; and

wherein the block copolymer : polymer weight ratio is in the range of from 10:90 to 70:30.

14. An aqueous dispersion obtained or obtainable from a process according to claims 12 or 13.

15. A crystallisable film obtained from an aqueous dispersion according to any one of claims 1 to 11 or 14.

16. A substrate coated with a coating comprising an aqueous dispersion according to any one of claims 1 to 11 or 14.

17. A substrate according to claim 15 heat-sealed at a temperature in the range of from 50 to 150 °C.

18. Use of a crystallisable film according to claim 15 for packaging.

**Patentansprüche**

1. Wäßrige Dispersion, umfassend ein kristallisierbares Vinylblockcopolymer-polymer, das i) ein Vinylblockcopolymer, das mindestens Blöcke $[A]_x[B]_y$ umfaßt, wobei mindestens ein kristallisierbarer Block [A] durch kontrollierte radikalische Polymerisation mindestens eines Vinylmonomers über einen RAFT-Mechanismus (RAFT = Reversible Addition-Fragmentation Chain Transfer) in Lösung in Gegenwart eines Kontrollagens und einer Radikalquelle erhalten wird; und
wobei das Vinylblockcopolymer 2 bis 45 Gew.-% Vinylmonomere mit mindestens einer kristallisierbaren Seitenkette, bezogen auf das Gewicht des Vinylblockcopolymer-polymers, umfaßt;

wobei Vinylmonomere mit kristallisierbaren Seitenketten Monomere mit Seitenketten, die insgesamt mindestens 5mal so viele Kohlenstoffatome enthalten wie die Hauptkette des Monomers, sind;
wobei der kristallisierbare Block [A] einen durchschnittlichen Polymerisationsgrad x aufweist, wobei x für eine ganze Zahl im Bereich von 3 bis 80 steht;
wobei der Block [B] einen durchschnittlichen Polymerisationsgrad y aufweist, wobei y für eine ganze Zahl ≥ 3 steht; und

ii) ein Vinylpolymer [P], erhalten durch radikalische Emulsionspolymerisation eines oder mehrerer Vinylmonomere in Gegenwart des Vinylblockcopolymers;

umfaßt; und wobei das Gewichtsverhältnis von Blockcopolymer zu Polymer im Bereich von 10:90 bis 70:30 liegt.

2. Wäßrige Dispersion nach Anspruch 1, wobei das Vinylblockcopolymer 15 bis 99 Gew.-% eines kristallisierbaren Blocks [A], umfassend:

i) 50 bis 100 Mol-% Vinylmonomere mit mindestens einer kristallisierbaren Seitenkette;
ii) 0 bis 30 Mol-% Vinylmonomere mit wasserdispergierbaren funktionellen Gruppen;
iii) 0 bis 5 Mol-% multiethylenisch ungesättigte Vinylmonomere;
iv) 0 bis 80 Mol-% andere Vinylmonomere als i), ii) und iii);

wobei i) + ii) + iii) + iv) = 100 Mol-%;
umfaßt.

3. Wäßrige Dispersion nach Anspruch 1 oder 2, wobei das Vinylblockcopolymer 1 bis 85 Gew.-% mindestens eines Blocks [B], umfassend:

i) 0 bis 40 Mol-% Vinylmonomere mit mindestens einer kristallisierbaren Seitenkette;
ii) 25 bis 100 Mol-% Vinylmonomere mit wasserdispergierbaren funktionellen Gruppen;
iii) 0 bis 5 Mol-% multiethylenisch ungesättigte Vinylmonomere;
iv) 0 bis 75 Mol-% andere Vinylmonomere als i), ii) und iii);

wobei i) + ii) + iii) + iv) = 100 Mol-%;
umfaßt.

4. Wäßrige Dispersion nach einem der Ansprüche 1 bis 3, wobei das Vinylpolymer [P]

ii) 0 bis 5 Gew.-% Vinylmonomere mit wasserdispergierbaren funktionellen Gruppen;
iii) 0 bis 5 Gew.-% multiethylenisch ungesättigte Vinylmonomere;
iv) 0 bis 60 Ges.-% andere Vinylmonomere als i), ii), iii) und v);
v) 40 bis 100 Gew.-% $C_1$- bis $C_{10}$-Alkyl (meth)-acrylate; und

wobei ii) + iii) + iv) + v) = 100 Gew.-%;
umfaßt.

5. Wäßrige Dispersion nach Anspruch 1, umfassend ein kristallisierbares Vinylblockcopolymer-polymer, das

a) 15 bis 99 Gew.-% eines kristallisierbaren Blocks [A] nach Anspruch 2;
b) 1 bis 85 Gew.-% mindestens eines Blocks [B] nach Anspruch 3;

wobei a) + b) = 100 Gew.-%, bezogen auf das Gewicht von Block [A] und Block [B];
umfaßt; und
ein Vinylpolymer [P] nach Anspruch 4.

6. Wäßrige Dispersion nach einem der Ansprüche 1 bis 5, wobei das Mw des Vinylpolymers [P] größer ist als das Mw des Vinylblockcopolymers.

7. Wäßrige Dispersion nach einem der Ansprüche 1 bis 6, wobei die Tm des kristallisierbaren Blocks [A] ≤ 110°C ist.

18

**8.** Wäßrige Dispersion nach einem der Ansprüche 1 bis 7, wobei das Vinylpolymer [P] eine berechnete Tg ≥ 0°C aufweist.

**9.** Wäßrige Dispersion nach einem der Ansprüche 1 bis 8, umfassend:

a) 10 bis 100 Gew.-% kovalent gebundenes kristallisierbares Vinylblockcopolymer-polymer;
b) 0 bis 40 Gew.-% freies kristallisierbares Vinylblockcopolymer;
c) 0 bis 90 Gew.-% freies Vinylpolymer;

wobei a) + b) + c) sich zu 100% summieren.

**10.** Wäßrige Dispersion nach Anspruch 9, wobei das kovalent gebundene kristallisierbare Vinylblockcopolymer-polymer ein Mw ≥ 21.000 g/mol aufweist.

**11.** Wäßrige Dispersion nach einem der vorhergehenden Ansprüche, wobei das Kontrollmittel aus der Gruppe bestehend aus Dithioestern, Thioether-thionen, Trithiocarbonaten, Dithiocarbamaten, Xanthaten und Mischungen davon ausgewählt ist.

**12.** Verfahren zur Herstellung einer wäßrigen Dispersion, umfassend ein kristallisierbares Vinylblockcopolymer-polymer; wobei das Blockcopolymer mindestens Blöcke $[A]_x[B]_y$ umfaßt, das die folgenden Schritte umfaßt:

i) Synthese mindestens eines kristallisierbaren Blocks [A] durch kontrollierte radikalische Polymerisation mindestens eines Vinylmonomers über einen RAFT-Mechanismus (RAFT = Reversible Addition-Fragmentation Chain Transfer) in Lösung in Gegenwart eines Kontrollagens und einer Radikalquelle;
wobei das Vinylblockcopolymer 2 bis 45 Gew.-% Vinylmonomere mit mindestens einer kristallisierbaren Seitenkette, bezogen auf das Gewicht des Vinylblockcopolymer-polymers umfaßt;
wobei Vinylmonomere mit kristallisierbaren Seitenketten Monomere mit Seitenketten, die insgesamt mindestens 5mal so viele Kohlenstoffatome enthalten wie die Hauptkette des Monomers, sind;
ii) Dispergieren des Blockcopolymers in Wasser;
iii) Synthese eines Polymers [P] durch radikalische Emulsionspolymerisation eines oder mehrerer Vinylmonomere in Gegenwart der in Schritt ii) hergestellten Blockcopolymerdispersion;

wobei das Gewichtsverhältnis von Blockcopolymer zu Polymer im Bereich von 10:90 bis 70:30 liegt.

**13.** Verfahren nach Anspruch 12 zur Herstellung einer wäßrigen Dispersion, umfassend ein kristallisierbares Vinylblockcopolymer-polymer; wobei das Blockcopolymer mindestens Blöcke $[A]_x[B]_y$ umfaßt, wobei mindestens ein kristallisierbarer Block [A] durch kontrollierte radikalische Polymerisation mindestens eines Vinylmonomers über einen RAFT-Mechanismus (RAFT = Reversible Addition-Fragmentation Chain Transfer) in Lösung in Gegenwart eines Kontrollagens und einer Radikalquelle erhalten wird; und wobei das Vinylblockcopolymer

a) 15 bis 99 Gew.-% eines kristallisierbaren Blocks [A], umfassend:

i) 50 bis 100 Mol-% Vinylmonomere mit mindestens einer kristallisierbaren Seitenkette;
ii) 0 bis 30 Mol-% Vinylmonomere mit wasserdispergierbaren funktionellen Gruppen;
iii) 0 bis 5 Mol-% multiethylenisch ungesättigte Vinylmonomere;
iv) 0 bis 80 Mol-% andere Vinylmonomere als i), ii) und iii);

wobei i) + ii) + iii) + iv) = 100 Mol-%;
b) 1 bis 85 Gew.-% eines Blocks [B], umfassend:

i) 0 bis 40 Mol-% Vinylmonomere mit mindestens einer kristallisierbaren Seitenkette;
ii) 25 bis 100 Mol-% Vinylmonomere mit wasserdispergierbaren funktionellen Gruppen;
iii) 0 bis 5 Mol-% multiethylenisch ungesättigte Vinylmonomere;
iv) 0 bis 75 Mol-% andere Vinylmonomere als i), ii) und iii);

wobei i) + ii) + iii) + iv) = 100 Mol-%;
umfaßt; und wobei a) + b) = 100 Gew.-%, bezogen auf das Gewicht von Block [A] und Block [B]; und wobei der kristallisierbare Block [A] einen durchschnittlichen Polymerisationsgrad x aufweist, wobei x für eine ganze Zahl im Bereich von 3 bis 80 steht;

wobei der Block [B] einen durchschnittlichen Polymerisationsgrad y aufweist, wobei y für eine ganze Zahl ≥ 3 steht; und

wobei das Vinylpolymer [P] durch radikalische Emulsionspolymerisation in Gegenwart von Blöcken $[A]_x[B]_y$ hergestellt wird, wobei das Polymer [P]

ii) 0 bis 5 Gew.-% Vinylmonomere mit wasserdispergierbaren funktionellen Gruppen;

iii) 0 bis 5 Gew.-% multiethylenisch ungesättigte Vinylmonomere;

iv) 0 bis 60 Gew.-% andere Vinylmonomere als i), ii), iii) und v);

v) 40 bis 100 Gew.-% $C_1$- bis $C_{10}$-Alkyl (meth) acrylate; und wobei ii) + iii) + iv) + v) = 100 Gew.- %;

umfaßt; und

wobei das Gewichtsverhältnis von Blockcopolymer zu Polymer im Bereich von 10:90 bis 70:30 liegt.

**14.** Wäßrige Dispersion, erhalten oder erhältlich nach einem Verfahren nach den Ansprüchen 12 oder 13.

**15.** Kristallisierbarer Film, erhalten aus einer wäßrigen Dispersion nach einem der Ansprüche 1 bis 11 oder 14.

**16.** Substrat, das mit einer Beschichtung, die eine wäßrige Dispersion nach einem der Ansprüche 1 bis 11 oder 14 umfaßt, beschichtet ist.

**17.** Substrat nach Anspruch 15, das bei einer Temperatur im Bereich von 50 bis 150°C heißgesiegelt ist.

**18.** Verwendung eines kristallisierbaren Films nach Anspruch 15 zum Verpacken.

**Revendications**

**1.** Dispersion aqueuse comprenant un copolymère bloc-polymère vinylique cristallisable qui comprend :

i) un copolymère bloc vinylique comportant au moins deux blocs $[A]_x[B]_y$, au moins l'un des blocs cristallisables [A] étant obtenu par polymérisation radicalaire contrôlée d'au moins un monomère vinylique par un mécanisme de transfert de chaîne par addition-fragmentation réversible (RAFT) en solution, en présence d'un agent de contrôle et une source de radicaux libres ; et

le copolymère bloc vinylique comprenant 2 à 45 % en masse de monomères vinyliques portant au moins une chaîne latérale cristallisable par rapport à la masse du copolymère bloc-polymère vinylique,

les monomères vinyliques portant des chaînes latérales cristallisables étant des monomères comportant au total au moins 5 fois plus d'atomes de carbone de squelette monomère ;

le bloc cristallisable [A] présentant un degré moyen de polymérisation x, x étant un entier compris entre 3 et 80 ; le bloc [B] présentant un degré moyen de polymérisation y, y étant un entier ≥ 3 ; et

ii) un polymère vinylique [P] obtenu par la polymérisation radicalaire en émulsion d'un ou de plusieurs monomères vinyliques en présence du copolymère bloc vinylique, et

le rapport massique copolymère bloc : polymère étant compris entre 10:90 et 70:30.

**2.** Dispersion aqueuse conforme à la revendication 1, où le copolymère bloc vinylique comprend entre 15 et 99 % en masse d'un bloc cristallisable [A] comportant :

i) 50 à 100 % molaires de monomères vinyliques portant au moins une chaîne latérale cristallisable ;

ii) 0 à 30 % molaires de monomères vinyliques portant des groupements fonctionnels hydrodispersibles ;

iii) 0 à 5 % molaires de monomères vinyliques portant plusieurs insaturations éthyléniques ;

iv) 0 à 80 % molaires de monomères vinyliques différents de i), ii) et iii); où i)+ii)+iii)+iv) = 100 % molaires.

**3.** Dispersion aqueuse conforme à la revendication 1 ou 2, où le copolymère bloc vinylique comprend entre 1 et 85 % en masse d'au moins un bloc [B] comportant :

i) 0 à 40 % molaires de monomères vinyliques portant au moins une chaîne latérale cristallisable ;

ii) 25 à 100 % molaires de monomères vinyliques portant des groupements fonctionnels hydrodispersibles ;

iii) 0 à 5 % molaires de monomères vinyliques portant plusieurs insaturations éthyléniques ;

iv) 0 à 75 % molaires de monomères vinyliques différents de i), ii) et iii); où i)+ii)+iii)+iv) = 100 % molaires.

4. Dispersion aqueuse conforme à l'une quelconque des revendications 1 à 3 où le polymère vinylique [P] comprend :

ii) 0 à 5 % en masse de monomères vinyliques portant des groupements fonctionnels hydrodispersibles ;
iii) 0 à 5 % en masse de monomères vinyliques portant plusieurs insaturations éthyléniques ;
iv) 0 à 60 % en masse de monomères vinyliques différents de i), ii), iii) et v) ;
v) 40 à 100 % en masse d'acrylates ou de méthacrylates d'alkyle en $C_1$ à $C_{10}$ ; et où ii)+iii)+iv)+v)=100 % en masse.

5. Dispersion aqueuse conforme à la revendication 1 comprenant un copolymère bloc-polymère vinylique cristallisable qui comporté :

a) 15 à 99 % en masse d'un bloc cristallisable [A] conforme à la revendication 2 ;
b) 1 à 85 % en masse d'au moins un bloc [B] conforme à la revendication 3 ;

où a) + b) = 100 % en masse par rapport à la masse du bloc [A] et du bloc [B] ;
et un polymère vinylique [P] conforme à la revendication 4.

6. Dispersion aqueuse conforme à l'une quelconque des revendications 1 à 5 où la Mw du polymère vinylique [P] est supérieure à la Mw du copolymère bloc vinylique.

7. Dispersion aqueuse conforme à l'une quelconque des revendications 1 à 6, où la Tm du bloc cristallisable [A] est ≤ 110 °C.

8. Dispersion aqueuse conforme à l'une quelconque des revendications 1 à 7, où le polymère vinylique [P] présente une Tg calculée ≥ 0 °C.

9. Dispersion aqueuse conforme à l'une quelconque des revendications 1 à 8, comprenant :

a) 10 à 100 % en masse d'un copolymère bloc-polymère vinylique cristallisable lié de façon covalente ;
b) 0 à 40 % en masse de copolymère bloc vinylique cristallisable libre ;
c) 0 à 90 % en masse de polymère vinylique libre ;

où a) + b) + c) = 100 %.

10. Dispersion aqueuse conforme à la revendication 9, où le copolymère bloc-polymère lié de façon covalente présente une Mw ≥ 21 000 g/mol.

11. Dispersion aqueuse conforme à l'une quelconque des revendications précédentes, où l'agent de contrôle est choisi dans le groupe constitué par les dithioesters, les thioéthers-thiones, les trithiocarbonates, les dithiocarbamates, les xanthates et leurs mélanges.

12. Procédé de synthèse d'une dispersion aqueuse comprenant un copolymère bloc-polymère cristallisable, ledit copolymère bloc comportant au moins les blocs $[A]_x[B]_y$, ledit procédé comprenant les étapes suivantes :

i) synthèse d'au moins un bloc cristallisable [A] par polymérisation radicalaire contrôlée d'au moins un monomère vinylique via un mécanisme de transfert de chaînes par addition-fragmentation réversible (RAFT) en solution, en présence d'un agent de contrôle et d'une source de radicaux libres ; le copolymère bloc vinylique comportant 2 à 45 % en masse de monomères vinyliques portant au moins une chaîne latérale cristallisable par rapport à la masse du copolymère bloc-polymère vinylique ;
les monomères vinyliques portant des chaînes latérales cristallisables étant des monomères comportant au total au moins 5 fois plus d'atomes de carbone de squelette monomère ;
ii) dispersion du copolymère bloc dans l'eau ;
iii) synthèse d'un polymère [P] par polymérisation radicalaire en émulsion d'un ou de plusieurs monomères vinyliques en présence de la dispersion de copolymère bloc préparée dans l'étape ii) ; le rapport massique copolymère bloc : polymère étant compris entre 10:90 et 70:30.

**EP 2 173 777 B1**

**13.** Procédé conforme à la revendication 12 pour l'élaboration d'une dispersion aqueuse comprenant un copolymère bloc-polymère cristallisable ; le copolymère bloc comportant au moins les blocs $[A]_x[B]_y$, au moins un bloc cristallisable [A] étant obtenu par polymérisation radicalaire contrôlée d'au moins un monomère vinylique via un mécanisme de transfert de chaînes par addition-fragmentation réversible (RAFT) en solution, en présence d'un agent de contrôle et d'une source de radicaux libres ; et le copolymère bloc vinylique comportant :

a) 15 à 99 % % en masse de bloc cristallisable [A] comportant :

i) 50 à 100 % molaires de monomères vinyliques portant au moins une chaîne latérale cristallisable ;
ii) 0 à 30 % molaires de monomères vinyliques portant des groupements fonctionnels hydrodispersibles ;
iii) 0 à 5 % molaires de monomères vinyliques portant plusieurs insaturations éthyléniques ;
iv) 0 à 80 % en masse de monomères vinyliques différents de i), ii) et iii) ;
où i)+ii)+iii)+iv) = 100 % molaires ;

b) 1 à 85 % en masse de bloc [B] comportant :

i) 0 à 40 % molaires de monomères vinyliques portant au moins une chaîne latérale cristallisable ;
ii) 25 à 100 % molaires de monomères vinyliques portant des groupements fonctionnels hydrodispersibles ;
iii) 0 à 5 % molaires de monomères vinyliques portant plusieurs insaturations éthyléniques ;
iv) 0 à 75 % en masse de monomères vinyliques différents de i), ii) et iii) ;

où i)+ii)+iii)+iv) = 100 molaires ;
et où a) + b) = 100 % en masse par rapport à la masse du bloc [A] et du bloc [B] ; et
où le bloc cristallisable [A] présente un degré moyen de polymérisation x, x étant un entier compris entre 3 et 80 ;
où le bloc [B] présente un degré moyen de polymérisation y, y étant un entier $\geq$ 3; et
où le polymère vinylique [P] est synthétisé par polymérisation radicalaire en émulsion en présence des blocs $[A]_x[B]_y$, le polymère [P] comportant :

ii) 0 à 5 % en masse de monomères vinyliques portant des groupements fonctionnels hydrodispersibles ;
iii) 0 à 5 % en masse de monomères vinyliques portant plusieurs insaturations éthyléniques ;
iv) 0 à 60 % en masse de monomères vinyliques différents de i), ii), iii) et v) ;
v) 40 à 100 % en masse d'acrylates ou de (méth)acrylates d'alkyle en $C_1$ à $C_{10}$ ; et où ii)+iii)+iv)+v)=100 % en masse ; et

le rapport massique copolymère bloc : polymère étant compris entre 10:90 et 70:30.

**14.** Dispersion aqueuse obtenue ou pouvant être obtenue à partir d'un procédé conforme aux revendications 12 ou 13.

**15.** Pellicule cristallisable obtenue à partir d'une dispersion aqueuse conforme à l'une quelconque des revendications 1 à 11 ou 14.

**16.** Substrat revêtu d'un revêtement constitué d'une dispersion aqueuse conforme à l'une quelconque des revendications 1 à 11 ou 14.

**17.** Substrat conforme à la revendication 15, thermoscellé à une température comprise entre 50 et 150°C.

**18.** Emploi d'une pellicule cristallisable conforme à la revendication 15 pour l'emballage.

**22**

**EP 2 173 777 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0949975 A
- EP 0989143 A
- US 20040054108 A
- WO 2005097854 A
- EP 0947527 A
- WO 03040192 A
- EP 1693392 A
- WO 9931144 A
- WO 9935177 A
- WO 9801478 A
- WO 9858974 A

**Non-patent literature cited in the description**

- **Lacroix-Desmazes et al.** Reverse Iodine Transfer Polymerisation (RITP) in emulsion. *Macromol. Symp.,* 2007, vol. 248, 150-157
- **Qin, S. et al.** Synthesis of Block, Statistical, and Gradient Copolymers from Octadecyl (Meth)acrylates Using Atom Transfer Polymerisation. *Macromolecules,* 2003, vol. 36, 8969-8977
- *Macromolecules,* 1998, vol. 31, 5559-5562
- *Macromolecular Symposia,* 2000, vol. 150, 23-32
- *Journal of Coating Technology,* 1995, vol. 66 (839), 89-105
- nonionic surfactants - Physical chemistry. 1987